# EUROPEAN PATENT APPLICATION

(11) **EP 1 273 722 A1**
(43) Date of publication of application: **08.01.2003**
(21) Application number: 01917748.4
(22) Date of filing: 30.03.2001
(51) Int. Cl.: E02F 9/20

(54) **CONSTRUCTION MACHINE MANAGING SYSTEM**

(30) Priority: 31.03.2000 JP 2000099140
(71) Applicant: HITACHI CONSTRUCTION MACHINERY CO., LTD., Bunkyo-ku, Tokyo 112-0004 (JP)
(72) Inventor: ADACHI, Hiroyuki, Okijyukumachi, Tsuchiurashi, Ibaraki 300 (JP); HIRATA, Toichi, Sakaechou, Ushikushi, Ibaraki 300-1233 (JP); SUGIYAMA, Genroku, Mihomura, Inashiki-gun, Ibaraki 300-0402 (JP); WATANABE, Hiroshi, Taguuchou, Ushikushi, Ibaraki 300-1236 (JP); SHIBATA, Koichi, Tsuchiurashi, Ibaraki 300-0011 (JP); KOMATSU, Hideki, Tonemachi, Kitasouma-gun, Ibaraki 300-16 (JP)
(74) Representative: Prins, Adrianus Willem
(86) International application number: JP0102816
(87) International publication number: WO01073225

(57) **Abstract**

A construction machine management system includes a receiver provided at a remote location from a plurality of construction machines, which receives information related to the lengths of operating time of the construction machines individually transmitted from the construction machines and a decision-making device that makes a decision as to whether or not there is any over-operated construction machine based upon the operating time information that has been received.

## Description

### TECHNICAL FIELD

The present invention relates to a management system which enables transmission of operating statuses of a plurality of construction machines which are received on the base station side.

### BACKGROUND ART

There are management systems in the known art that allow data related to the operating statuses of work machines such as construction machines or dump trucks and collected by collecting devices each provided in correspondence to one of the work machines to be transmitted to a remote base station by employing means for communication (see Japanese Laid-Open Patent Publication No. H 10-140616, for instance). Great advantages in the maintenance control can be achieved by utilizing such a system since the operating statuses of a plurality of work machines can be accurately ascertained on the base station side and a machine failure, for instance, can be preempted by taking appropriate action on the machine in advance.

At present, it is difficult for a rental company who owns a plurality of construction machines and earns revenue by renting out the construction machines to users to keep current information on the operating statuses of construction machines that are rented out. If the rental company is able to keep current information on the operating statuses, he can launch a more aggressive sales program by, for instance, recommending that the user rent another machine when the machine currently rented out to the user is engaged in operation over a very long period of time, which is bound to prove extremely advantageous from the viewpoint of business strategy.

### DISCLOSURE OF THE INVENTION

An object of the present invention is to provide a construction machine management system capable of providing a rental company, a user and the like with useful information with regard to the operating statuses of construction machines.

In order to achieve the object described above, the construction machine management system according to the present invention includes transmitters each provided in correspondence to a single construction machine to transmit information related to the length of operating time of the construction machine and a base station having a receiver that receives information transmitted from a plurality of construction machines, a decision-making device that makes a decision as to whether or not there is any over-operated construction machine based upon the information related to the length of operating time that has been received and a base station-side transmitter that transmits information reflecting the results of the decision made by the decision-making device to another organization (e.g., the rental company or the user of the construction machines).

The present invention, which allows the rental company or the user to ascertain whether or not there is any over-operated construction machine achieves various advantages, i.e., the rental company is able to recommend that the user rent another machine if there is an over-operated machine or the user can use the information as a basis for making a decision as to whether or not he should rent (purchase) another machine.

Information related to the workloads on the construction machines may instead be transmitted so that a decision can be made as to whether or not there is any overworked construction machine based upon the information related to the workloads and, in such a case, information reflecting the decision-making results should be transmitted to another organization. Through this system, the rental company can recommend that the user replace the overworked machine with an upgrade machine or the user can use the information as a basis for making a decision as to whether or not the machine should be replaced.

Alternatively, information related to the working statuses and the travelling statuses of the construction machines may be transmitted so that a decision can be made as to whether or not there is any overworked construction machine based upon the information related to the working statuses and a decision can be made as to whether or not there is any over-travelled construction machine based upon the information related to the travelling statuses and, in such a case, information reflecting the results of these decisions should be transmitted to another organization. This enables the rental company to present the user with an appropriate recommendation that a switch be made between the overworked machine and the over-travelled machine or enables the user to use the information as a basis for making an appropriate decision with regard to a machine switch.

In addition, the present invention enables an exchange of construction machines between rental business operators.

### BRIEF DESCRIPTION OF THE DRAWINGS

FIG. 1 is a schematic block diagram of the management system achieved in a first embodiment of the present invention;
FIG. 2 is a block diagram illustrating the structure assumed in the hydraulic excavator control system;
FIG. 3 presents a flowchart of the processing implemented at the individual hydraulic excavators in the first embodiment;
FIG. 4 presents a flowchart of the processing implemented at the individual hydraulic excavators in the first embodiment;
FIG. 5 presents a flowchart of the processing implemented at the base station in the first embodiment;
FIGS. 6A ~ 6C present an example of the grouping processing;
FIG. 7 presents a flowchart of the processing implemented at the individual hydraulic excavators in a second embodiment;
FIG. 8 presents a flowchart of the processing implemented at the base station in the second embodiment;
FIG. 9 presents a flowchart of the processing implemented at the base station in another embodiment;
FIG. 10 is a schematic block diagram of the management system achieved in a third embodiment; and
FIG. 11 presents a flowchart of the processing implemented at the base station in the third embodiment.

### BEST MODE FOR CARRYING OUT THE INVENTION

### -First Embodiment-

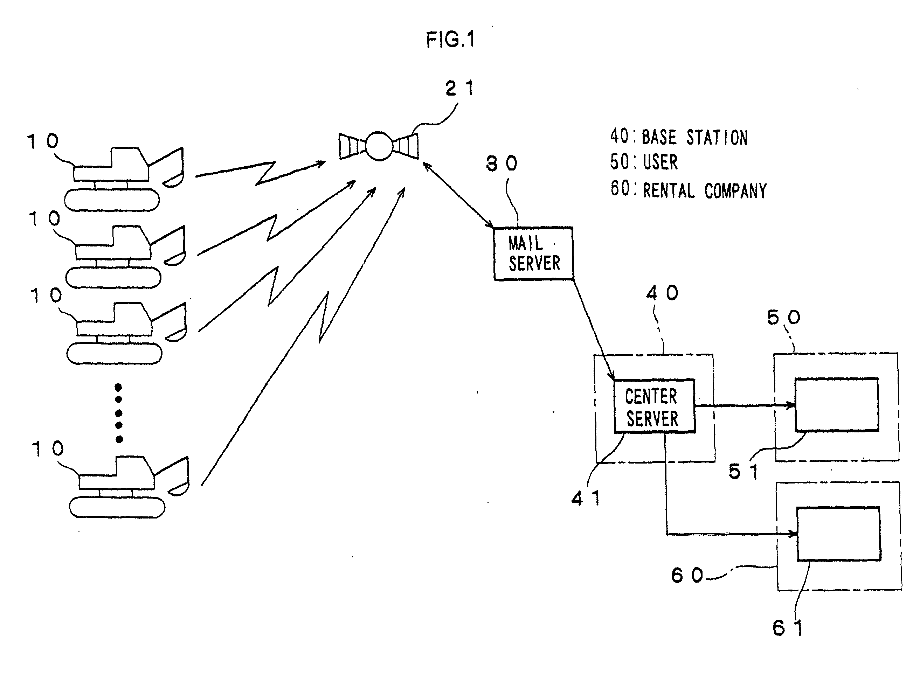

The first embodiment of the present invention is now explained in reference to FIGS. 1 ~ 5.

FIG. 1 schematically shows the structure of the system according to the present invention. A plurality of hydraulic excavators 10 in the figure are all owned by a rental company 60. While there are numerous such rental companies in existence in reality, we shall focus on a single rental company 60 so as to simplify the explanation.

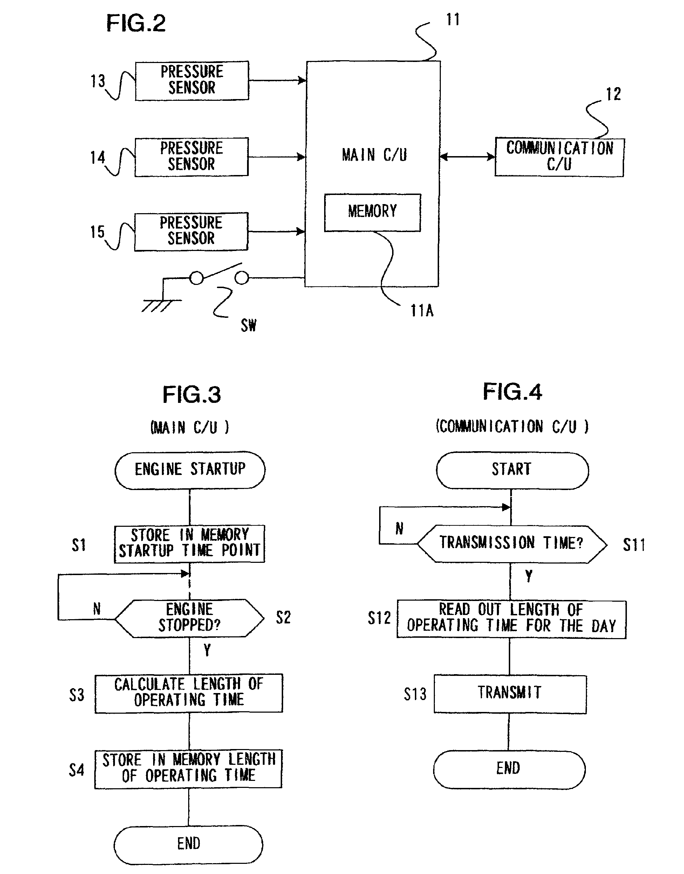

The hydraulic excavators 10 each include a main control unit 11 and a communication control unit 12, as shown in FIG. 2. A switch SW that detects the engine key state and pressure sensors 13, 14 and 15 that respectively detect the excavation load, the swiveling load and the traveling load are connected to the main control unit 11 as inputs. The main control unit 11 determines the operating status of the hydraulic excavator (the control target machine) based upon the information input through the various sensors and the switch. Details of the operating status are to be provided later.

The communication control unit 12 transmits the operating status of the hydraulic excavator 10 every day at a preset time. The information thus transmitted is provided to a specific management server via a communications satellite 21. A mail server 30 is utilized as the management server in the embodiment. It is to be noted that the information transmitted in this manner includes various types of information such as information indicating the hydraulic excavator location and hydraulic excavator malfunction information (fault information) in addition to the information on the operating status.

A center server 41 is installed at a base station (e.g., the head office or a branch of the construction machine company) 40 located over a distance from the hydraulic excavators 10. The center server 41 is capable of taking in the information transferred to the mail server 30 and transmitting information to a terminal 51 of a user 50 or a terminal 61 of the rental company 60 as necessary.

Next, in reference to the flowcharts presented in FIGS. 3 ~ 5, a specific example of the processing implemented to transmit/receive information is explained.

FIG. 3 shows the processing executed by the main control unit 11 of each hydraulic excavator 10. First, the time point at which the engine is started up is stored into a memory 11A as the engine startup time point (step S1). Then, as it is judged in step S2 that the engine has stopped based upon the state of the switch SW, the length of time over which the hydraulic excavator has been engaged in operation is calculated by subtracting the startup time point having been stored in memory from the engine stop time point (step S3) . The length of operating time thus calculated is added to the total length of operating time for the day currently stored in memory and the new total is stored in the memory 11A (step S4) . It is to be noted that if the total length of operating time for the day has not yet been stored in memory, the length of operating time that has been calculated as described above is directly stored into memory. Thus, the entire total length of operating time for the day is ultimately stored into the memory 11A.

FIG. 4 shows the processing executed by the communication control unit 12 of the hydraulic excavator 10. As it is decided in step S11 that the time has reached a predetermined transmission point, the total length of operating time for the day is read out from the memory 11A (step S12). This total length of operating time is transmitted together with an ID number assigned to identify the hydraulic excavator 10 (step S13). In this example, transmission is performed late at night when the volume of other communications is relatively small and the total length of operating time for the previous day is transmitted every day. In addition, the total operating time information is transmitted from all hydraulic excavators regardless of whether or not they are currently rented out to the user 50.

The information transmitted from the individual hydraulic excavators 10 is provided to the mail server 30 via the communications satellite 21 as explained earlier and is then transferred to the base station 40.

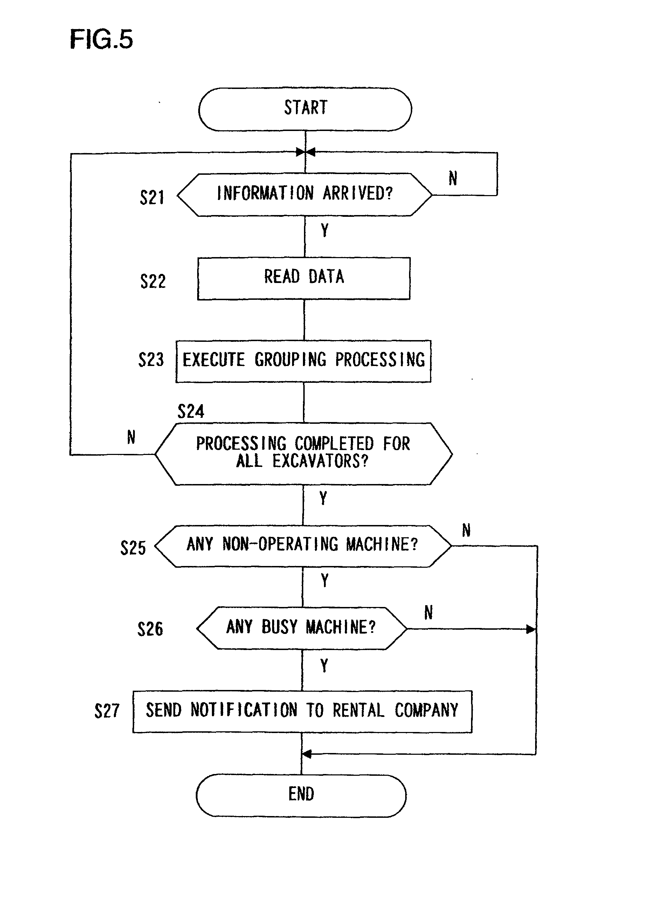

FIG. 5 shows the processing executed by the center server 41 at the base station 40. It is judged as to whether or not the information transmitted from a hydraulic excavator 10 has arrived (step S21), and the information is read if it has arrived (step S22) . Then, based upon the information thus read and past data, grouping processing is executed for the hydraulic excavator 10 (step S23).

Now, a specific example of the grouping processing is explained.

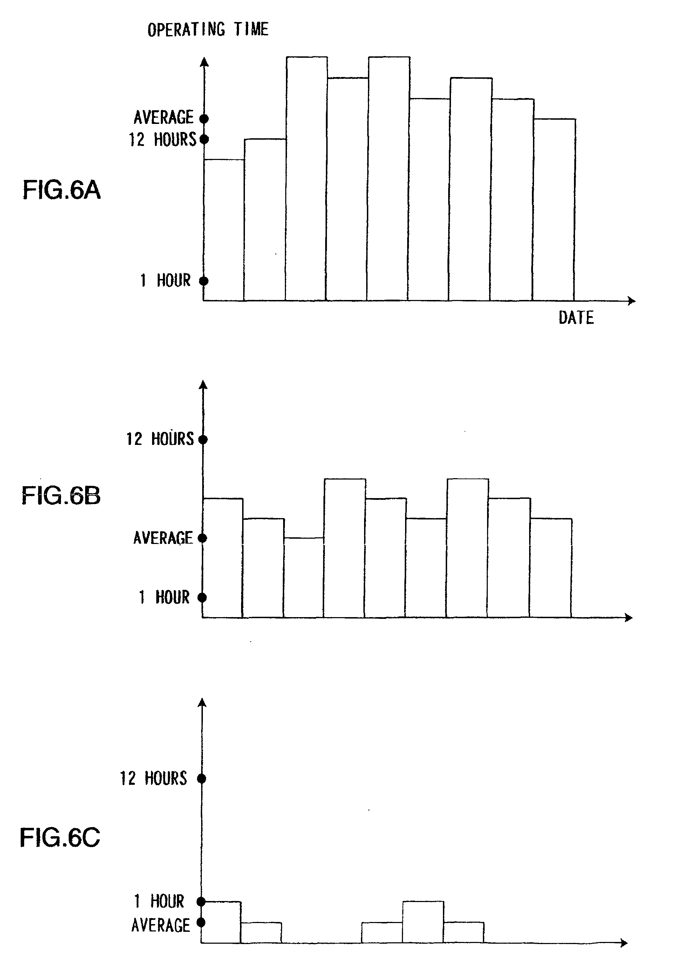

In this example, each hydraulic excavator is classified as a "busy machine," a "standard operating machine" or a "non-operating machine". The data read in step S22 (the length of time the hydraulic shovel was engaged in operation for the day) are stored in memory and, based upon the data and similar data collected over the past few days and stored into memory (see FIG. 6), the latest daily average operating time is determined. Then, if the daily average operating time is very long, as shown in FIG. 6A (e.g., at least 12 hours), the construction machine is classified as a busy machine. If, on the other hand, the daily average operating time falls within a standard range, as shown in FIG. 6B (e.g., equal to or greater than 1 hour and less than 12 hours), the construction machine is classified as a standard operating machine. If the daily average operating time is short, as shown in FIG. 6C (e.g., less than 1 hour), the construction machine is classified as a non-operating machine.

When it is decided in step S24 that the processing described above has been executed for all the hydraulic excavators 10, the processing in step S25 and subsequent steps is implemented. Namely, if it is decided that there are both a non-operating machine and a busy machine (steps S25 and S26) , the rental company 60 owning the hydraulic excavators 10 is advised that there is a busy machine via, for instance, electronic mail. At this time, the rental company 60 is also notified of the ID number of the busy machine (step S27) .

Upon receiving the mail from the base station 40, the rental company 60 identifies the busy machine and the user renting out the busy machine based upon the ID number. Then, the rental company 60 can present the user 50 with an appropriate recommendation that since the hydraulic excavator assigned with the ID number is heavily engaged in operation, another hydraulic excavator 10 should be rented by contacting the user 50 through electronic mail or the like. In this situation, if the busy machine and the non-operating machine are rented out to a single user 50, the rental company 60 may recommend that the non-operating machine be sent to a busy site, as well.

As explained above, the information indicating the lengths of operating time of the plurality of hydraulic excavators 10 owned by the rental company 60 is transmitted to the base station 40, a decision is made at the base station 40 as to whether or not there is any busy machine and a notification is sent to the rental company 60 if there is a busy machine. Thus, the rental company 60 is able to approach the user 50 with an effective sales pitch, which is bound to prove advantageous from the viewpoint of business strategy. In addition, the user is able to achieve better work efficiency by renting another excavator if there is a busy machine or by sending a non-operating machine to a busy site.

It is to be noted that while a decision is made as to whether or not there is any busy machine on the base station side and a notification is issued to the rental company only if there is a busy machine in the example explained above, the base station may instead notify the rental company of the results of the grouping processing regardless of whether or not there is any busy machine so as to allow the rental company to deliberate on the results of the grouping processing to formulate an appropriate action.

In addition, the method of grouping is not limited to the example explained above. For instance, a hydraulic excavator that has not been engaged in operation at all for several days in succession (e.g., 3 days in a row) may be determined to be a non-operating machine and a hydraulic excavator that has been engaged in operation for a number of days in succession (e.g., 15 days in a row), i.e., a hydraulic excavator that has been engaged in operation for two 2-day weekends (Saturday and Sunday) in a row, may be determined to be a busy machine. Furthermore, since the work is halted in rainy weather, the operating statuses may be judged by taking into consideration the weather information available on the Internet as well.

### -Second Embodiment-

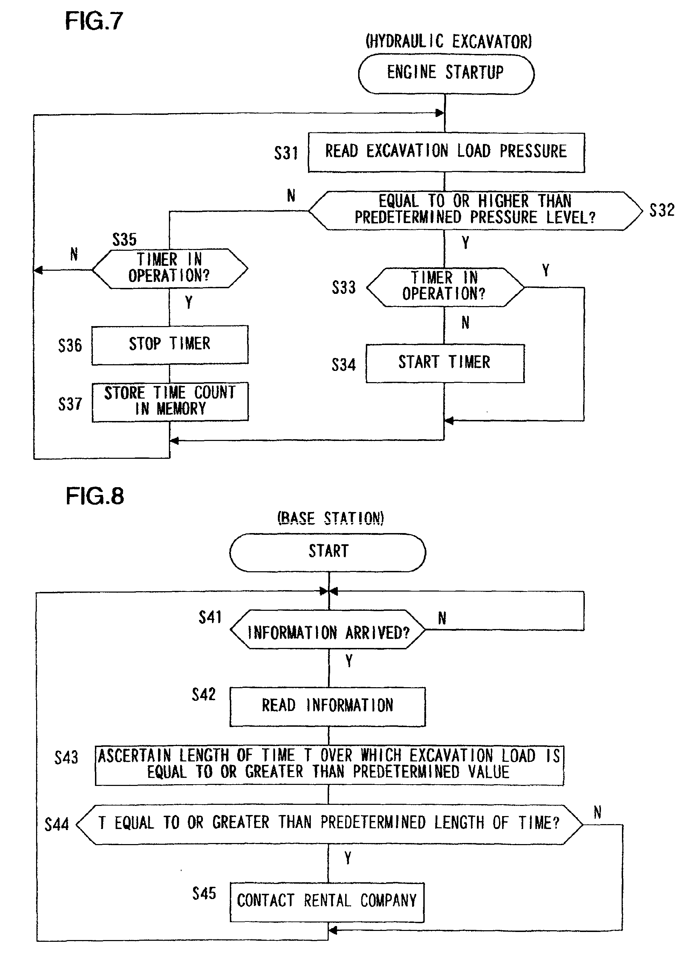

FIGS. 7 and 8 show the second embodiment of the present invention.

This embodiment allows information indicating the length of time over which the excavation load pressure in a hydraulic excavator 10 is equal to or greater than a predetermined value to be transmitted. The basic structure assumed in the system is identical to that shown in FIG. 1.

FIG. 7 shows the processing executed by the main control unit 11 of each hydraulic excavator 10. As the engine is started up, the excavation load pressure, which is the detection output from the pressure sensor 13, is read (step S31) and a decision is made as to whether or not the pressure is equal to or greater than a predetermined value (step S32). If the pressure is equal to or greater than the predetermined value, a decision is made as to whether or not a timer is currently in operation (step S33), and if the timer is not currently in operation, it is started up in step S34 before the operation returns to the processing start. If the pressure is smaller than the predetermined value, a decision is made as to whether or not the timer is currently in operation (step S35), and the timer is stopped if it is determined to be in operation (step S36). Then, the length of time that has elapsed between the timer startup and the timer stop is added to the time count already stored in memory and the total time count is stored into the memory 11A (step S37). Thus, the length of time over which the excavation load is held at a level equal to or greater than the predetermined value is stored in memory.

In this situation, if the excavation load of a hydraulic excavator is equal to or greater than the predetermined value, the hydraulic excavator 10 is engaged in fairly hard excavation work. If the hydraulic excavator 10 is engaged in such hard excavation work over a significant length of time, it should be replaced by a higher grade hydraulic excavator, to achieve better work efficiency.

The information stored in the memory 11A, i.e., the information indicating the length of time over which the excavation load is held at a level equal to or higher than the predetermined value (corresponds to information related to the work load), is transmitted via the communication control unit 12 as in the previous embodiment

FIG. 8 shows the processing executed by the center server 41 at the base station. If it is decided in step S41 that the information from the hydraulic excavator 10 has arrived, the information is read (step S42) . Based upon the information thus read, the length of time T over which the excavation load was equal to or greater than the predetermined value over a single day or a specific number of days is ascertained (step S43). Then, a decision is made as to whether or not the length of time T is equal to or greater than a predetermined length of time (step S44) . If the length of time T is equal to or greater than the predetermined length of time, the hydraulic excavator is judged to be overworked and a notification is sent to the rental company 60 via electronic mail or the like (step S45). At this time, the rental company 60 is also notified of the ID number assigned to the hydraulic excavator and the length of time T.

The rental company 60, having received the notification from the base station 40, is enabled to present the user 50 with a recommendation that the overworked hydraulic excavator be replaced with a hydraulic excavator rated higher by one grade with a larger bucket capacity by contacting the user 50 via electronic mail or the like.

It is to be noted that while a decision is made as to whether or not the hydraulic excavator is overworked based upon its excavation load in the example explained above, a similar decision may be made based upon the swiveling load. Namely, information may be transmitted by determining the length of time over which the swiveling load detected by the pressure sensor 14 has been equal to or greater than a predetermined value so as to determine whether or not the hydraulic excavator is overworked based upon whether or not the length of time is equal to or greater than a predetermined length of time. In addition, while a notification is sent only to the rental company if the hydraulic excavator is judged to be overworked, the information indicating the length of time T may be provided regardless of whether or not the hydraulic excavator is overworked to allow the rental company to make an appropriate decision.

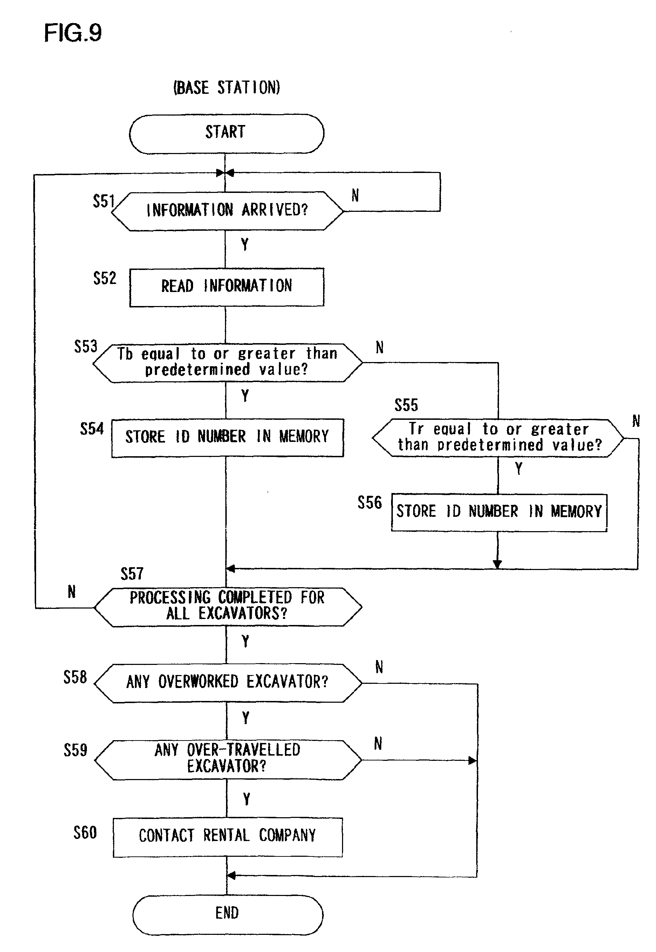

Furthermore, if there are both a hydraulic excavator heavily engaged in excavation work and an over-travelled hydraulic excavator, for instance, the system may recommend that the work sites of these hydraulic excavators be switched, i.e., that the overworked hydraulic excavator be sent to the site where the over-travelled hydraulic excavator has been placed and over-travelled hydraulic excavator be sent to the site where the overworked hydraulic excavator has been placed. To explain this concept in further detail, an overworked hydraulic excavator tends to become damaged faster around its front including the pins at the work front, whereas an over-travelled hydraulic excavator tends to become damaged faster in its traveling system, including the traveling rollers. By switching their work sites, early damage to these parts can be prevented. In the system, each hydraulic excavator 10 individually counts the length of time Tb over which it is engaged in work (e.g., the length of time over which the work front is engaged in operation) and the length of time Tr over which it travels (e.g., the length of time over which the traveling hydraulic motor is driven) and transmits information indicating these lengths of time to the base station 40 on a regular basis. Based upon the information transmitted from the hydraulic excavator 10, the base station 40 implements processing such as that shown in FIG. 9. It is to be noted that the length of excavation work time and the length of traveling time can be calculated by detecting the corresponding operating pilot pressures in hydraulic circuits (not shown).

If it is decided in step S51 in FIG. 9 that the information from the hydraulic excavator 10 has arrived, the information (the work time Tb and the traveling time Tr) is read (step S52). If it is decided that the length of work time Tb is equal to or greater than a predetermined value (step S53), the hydraulic excavator is judged to be overworked and the ID number assigned to the hydraulic excavator is stored into memory (step S54). In addition, if it is decided that the length of traveling time Tr is equal to or greater than a predetermined value (step S55) , the hydraulic excavator is judged to be over-travelled and the ID number assigned to the hydraulic excavator is separately stored into memory (step S56). Then, a decision is made as to whether or not the processing described above has been implemented for all the hydraulic excavators (step S57), and the operation returns to step S51 if a negative judgement is made, whereas the operation proceeds to step S58 if an affirmative judgement is made.

In steps S58 and S59 respectively, a decision is made as to whether or not there is any overworked hydraulic excavator and a decision is made as to whether or not there is any over-travelled hydraulic excavator, and a notification is sent to the rental company if there are both an overworked hydraulic excavator and an over-travelled hydraulic excavator (step S60).

As a result, the rental company is able to present the user with a recommendation that the overworked hydraulic excavator and the over-travelled hydraulic excavator switch their work sites.

It is to be noted that while the decisions as to whether or not an hydraulic excavator is overworked and whether or not an hydraulic excavator is over-travelled are simply made based upon the lengths of work time and traveling time respectively, these decisions may instead be made in conformance to the lengths of time over which the work load and the traveling load are equal to or greater than predetermined values. While a notification is issued if there are both an overworked excavator and an over-travelled excavator in the example explained above, the rental company may instead be notified of the presence/absence of an overworked excavator or an over-travelled excavator.

Moreover, while a notification is sent from the base station to the rental company in the first and second embodiments described above, a notification may be directly provided to the user from the base station instead.

### -Third Embodiment-

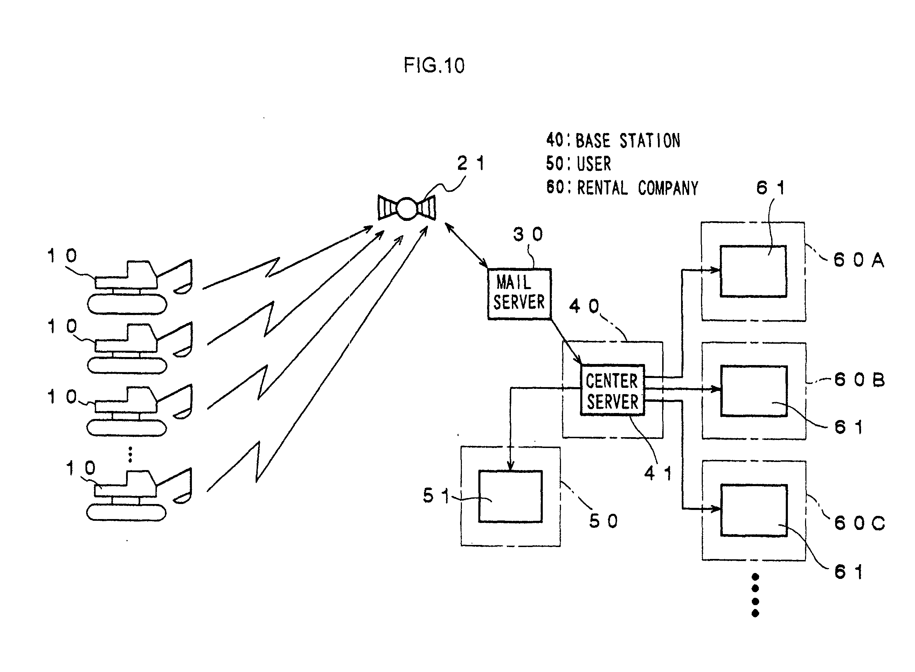

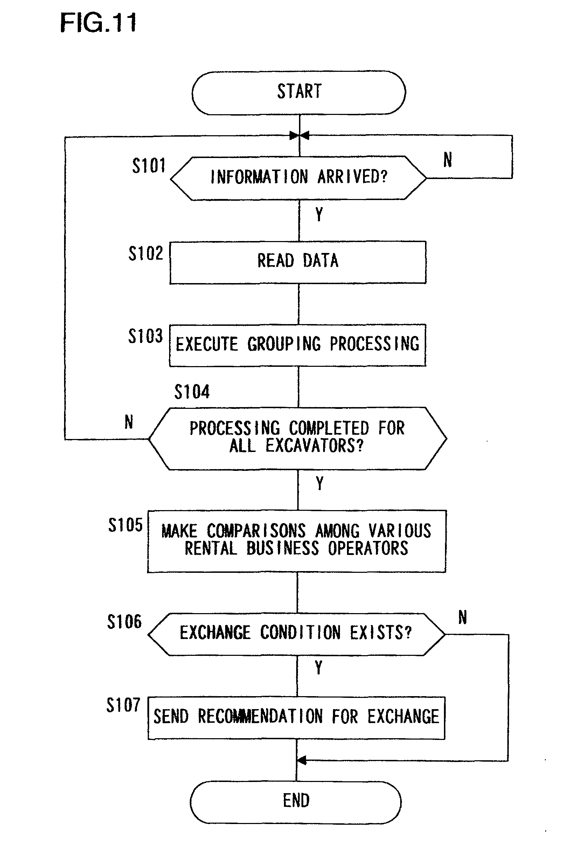

The third embodiment of the present invention is now explained in reference to FIG. 10 and FIG. 11.

In the embodiment, hydraulic excavators belonging to different rental companies can be exchanged based upon the operating statuses of the hydraulic excavators 10.

FIG. 10 is a block diagram illustrating the structure assumed in the system in the embodiment, with the same reference numerals assigned to components identical to those in FIG. 1. The center server 41 at the base station 40 is capable of individually transmitting information to terminals 61 of a plurality of rental companies (60A, 60B, 60C ..., hereafter collectively indicated by using reference numeral 60) via electronic mail or the like.

It is assumed that from each hydraulic excavator 10, the total length of operating time for the day and its ID number are transmitted through the processing in FIG. 5 which has been explained earlier.

FIG. 11 shows the processing executed by the center server 41 at the base station 40. A decision is made as to whether or not the information (the total length of operating time for the day and the ID number) transmitted from a hydraulic excavator 10 has arrived (step S101) and the information is read if it has arrived (step S102) . Based upon the information thus read and past data, grouping processing is executed for the hydraulic excavator 10 (step S103). The details of the grouping processing have already been explained, and through this grouping processing, a plurality of hydraulic excavators 10 owned by the plurality of rental companies 60 are classified into three groups, i.e., "busy machines", "standard operating machines" and "non-operating machines".

When it is decided that the processing described above has been executed for all the hydraulic excavators 10 (step S104), the operating statuses of the hydraulic excavators 10 owned by the various rental companies 60 are compared (step S105), and a decision is made as to whether or not an exchange condition is present based upon the results of the comparison (step S106). If there is an exchange condition, notifications are sent to the rental companies 60 via, for instance, electronic mail, together with the ID numbers of the hydraulic excavators 10 (step S107) .

For instance, if;
1) there is a busy machine and no non-operating machine among the excavators owned by the rental company 60A and
2) there is a non-operating machine and no busy machine among the excavators owned by the rental company 60B,
it is decided that an exchange condition exists. Then, electronic mails recommending an exchange between the busy machine belonging to the rental company 60A and the non-operating machine belonging to the rental company 60B are delivered to the two rental companies 60A and 60B. At this time, the rental company 60A is notified of the ID number assigned to the busy machine and the rental company 60B is notified of the ID number assigned to the non-operating machine.

Upon receiving the mails sent from the base station 40, the rental companies 60 contact each other to decide whether or not the hydraulic excavators are to be exchanged. During this process, mutually advantageous exchange terms can be worked out by taking into consideration the distribution of the rental fees and the like. For instance, a rental company 60 owning a number of busy machines is able to prevent damage premature to its hydraulic excavators, whereas a rental company 60 owning a number of non-operating machines can increase its revenues by reducing the number of idle machines.

Such an exchange of hydraulic excavators 10 between different rental companies may also be made in conjunction with the second embodiment explained earlier. Namely, it is possible to exchange an overworked hydraulic excavator owned by a given rental company with an over-travelled hydraulic excavator owned by another rental company. In this case, after executing the processing in steps S51 ~ S57 in FIG. 9, for instance, the center server 41 at the base station 40 should verify that there are both a rental company owning an overworked hydraulic excavator and a rental company owning an over-travelled hydraulic excavator and send notifications to the two rental companies to recommend an exchange based upon the results of the verification.

It is to be noted that such an exchange may be made between different branches of a single rental company instead of between different rental companies. In this case, the head office or one of the branches of the rental company instead of the construction machine maker may be designated as the base station.

### INDUSTRIAL APPLICABILITY

While an explanation has been given above on an example in which the present invention is adopted in a hydraulic excavator management system, the present invention may be adopted in a management system for construction machines (such as cranes) other than hydraulic excavators as well.

## Claims

1. A construction machine management system that receives information transmitted from a plurality of construction machines at a base station, wherein:
the construction machines each include a transmitter that transmits information related to a length of time over which the construction machine is engaged in operation; and
the base station includes a receiver that receives the information transmitted from the plurality of construction machines, a decision-making device that makes a decision whether there is any over-operated construction machine based upon the information related to the operating time that has been received and a base station-side transmitter that transmits information reflecting results of the decision made by the decision-making device to another organization.

2. A construction machine management system according to claim 1, wherein:
if it is decided that there is an over-operated construction machine, the base station-side transmitter transmits information indicating that there is an over-operated construction machine.

3. A construction machine management system that receives information transmitted from a plurality of construction machines at a base station, wherein:
the construction machines each include a transmitter that transmits information related to a workload on the construction machine; and
the base station includes a receiver that receives the information transmitted from the plurality of construction machines, a decision-making device that makes a decision whether there is any overworked construction machine based upon the information related to the workload that has been received and a base station-side transmitter that transmits information reflecting results of the decision made by the decision-making device to another organization.

4. A construction machine management system according to claim 3, wherein:
if it is decided that there is an overworked construction machine, the base station-side transmitter transmits information indicating that there is an overworked construction machine.

5. A construction machine management system that receives information transmitted from a plurality of construction machines at a base station, wherein:
the construction machines each include a transmitter that transmits information related to a working status and information related to a travelling status of the construction machine; and
the base station includes a receiver that receives the information transmitted from the plurality of construction machines, a decision-making device that makes a decision whether there is any overworked construction machine based upon the information relating to the working status that has been received and also makes a decision whether there is any over-travelled construction machine based upon the information relating to the travelling status that has been received and a base station-side transmitter that transmits information reflecting results of the decisions made by the decision-making device to another organization.

6. A construction machine management system according to claim 5, wherein:
if it is decided that there are both an overworked construction machine and an over-travelled construction machine, the base station-side transmitter transmits information indicating that there are an overworked construction machine and an over-travelled construction machine.

7. A construction machine management system according to any one of claims 1 through 6, wherein:
the base station-side transmitter transmits information to another organization via electronic mail.

8. A construction machine management system comprising:
a receiver provided at a remote location from a plurality of construction machines, which receives information related to lengths of operating time of the construction machines transmitted from the construction machines; and
a decision-making device that makes a decision whether there is any over-operated construction machine based upon the information relating to the operating time that has been received.

9. A construction machine management system comprising:
a receiver provided at a remote location from a plurality of construction machines, which receives information related to a workload of the construction machines transmitted from the construction machines; and
a decision-making device that makes a decision whether there is any overworked construction machine based upon the information relating to the workload that has been received.

10. A construction machine management system comprising:
a receiver provided at a remote location from a plurality of construction machines, which receives information related to working statuses and information related to travelling statuses of the construction machines transmitted from the construction machines; and
a decision-making device that makes a decision whether there is any overworked construction machine based upon the information related to the working status that has been received and also makes a decision whether there is any over-travelled construction machine based upon the information related to the travelling status that has been received.

11. A construction machine management system according to any one of claims 8 through 10, further comprising:
a transmitter that transmits information reflecting results of the decision made by the decision-making device to another organization.

12. A construction machine management system according to claim 11, wherein:
the transmitter transmits the information to the another organization via electronic mail.

13. A construction machine management system according to claim 11 or 12, wherein:
the another organization is a construction machine rental company and
the transmitter transmits a recommendation that rented construction machines be switched with each other to the rental company based upon the results of the decision made by the decision-making device.

14. A construction machine management system that receives information related to lengths of operating time of a plurality of construction machines individually transmitted from the construction machines at a remote location, makes a decision whether there is any over-operated construction machine based upon the information related to the operating time that has been received and transmits information reflecting results of the decision to another organization.

15. A construction machine management system that receives information related to a workload of a plurality of construction machines individually transmitted from the construction machines at a remote location, makes a decision whether there is any overworked construction machine based upon the information related to the workload that has been received and transmits information reflecting results of the decision to another organization.

16. A construction machine management system that receives information related to working status and information related to travelling status of a plurality of construction machines individually transmitted from the construction machines at a remote location, makes a decision whether there is any overworked construction machine based upon the information related to the working status that has been received and also makes a decision whether there is any over-travelled construction machine based upon the information related to the travelling status that has been received and transmits information reflecting results of the decisions to another organization.

17. A construction machine management system according to any one of claim 14 through 16, wherein:
the another organization is a construction machine rental company and
a recommendation for a switch between rented construction machines is transmitted to the rental company based upon the results of the decisions.
